(19) Europäisches Patentamt European Patent Office Office européen des brevets

(11) **EP 1 925 384 A1**

(12) **EUROPEAN PATENT APPLICATION**

(43) Date of publication:
  **28.05.2008 Bulletin 2008/22**

(51) Int Cl.:
  *B23B 29/12* (2006.01)  *B23B 5/00* (2006.01)

(21) Application number: **07119644.8**

(22) Date of filing: **30.10.2007**

(84) Designated Contracting States:
  **AT BE BG CH CY CZ DE DK EE ES FI FR GB GR HU IE IS IT LI LT LU LV MC MT NL PL PT RO SE SI SK TR**
  Designated Extension States:
  **AL BA HR MK RS**

(30) Priority: **27.11.2006 JP 2006318957**

(71) Applicant: **FANUC LTD**
  **Minamitsuru-gun,**
  **Yamanashi 401-0597 (JP)**

(72) Inventors:
  • **Kawai, Tomohiko**
    **Yamanashi 401-0597 (JP)**
  • **Ebihara, Kenzo**
    **Yamanashi 401-0597 (JP)**
  • **Oda, Takayuki**
    **Yamanashi 401-0597 (JP)**

(74) Representative: **Thum, Bernhard**
  **Wuesthoff & Wuesthoff**
  **Patent- und Rechtsanwälte**
  **Schweigerstrasse 2**
  **81541 München (DE)**

(54) **Machining apparatus**

(57)   A machining apparatus capable of obscuring periodic machining irregularities. A workpiece W is mounted on a workpiece mounting surface of a worktable, and a tool T is supported by an elastic member (leaf spring) that is attached to a movable unit. A piezoelectric element is provided on the back of the leaf spring, and a driving voltage with irregular frequency and amplitude is applied to the piezoelectric element by a white noise generator during machining. Thus, a relative vibration displacement in a cutting-depth direction (vertical direction) is induced between the tool T and the workpiece W. In the case of a lathe apparatus, a relative vibration displacement is applied in the direction (horizontal direction) of a rotary axis of a workpiece fixture.

FIG.3a

**Description**

BACKGROUND OF THE INVENTION

1. Field of the Invention

The present invention relates to a machining apparatus for machining a surface of a workpiece with use of a tool, and more specifically, to a technique for improving a machining apparatus capable of relatively three-dimensionally moving a tool with respect to a workpiece so that a periodic change of machined surface accuracy, if any, is obscured on a machined surface.

2. Description of the Related Art

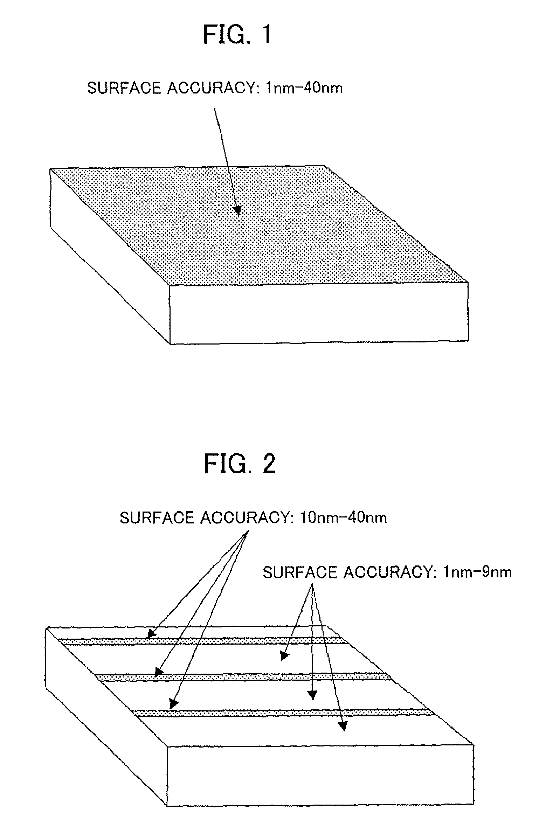

It is well-known that precision machining is performed by using a machining apparatus that can relatively three-dimensionally move a tool with respect to a workpiece. As a typical example of this precision machining, there is machining of a mold for a precision optical component, such as a light guide plate used in a liquid crystal display, DVD pickup lens, etc. Such machining requires uniformity in surface accuracy as well as a very high surface accuracy of nanometer order. In the machining of a mold (mold part) used in the manufacture of a light guide plate, for example, the required machining accuracy for a machined surface generally ranges from about 1 to 40 nm, as shown in FIG. 1. It is undesirable, however, that the machining accuracy should vary depending on the position on the machined surface.

In actual machining, however, it is not seldom that non-negligible variation in surface accuracy develops with periodicity at the location of manifestation. If a surface accuracy of less than 10 nm is aimed at in the machining of the mold part shown in FIG. 1, for example, belt-shaped regions of which the surface accuracy is reduced to 10 to 20 nm may be periodically generated, as shown in FIG. 2. The shape of the belt-shaped regions with the reduced surface accuracy varies according to the type, shape, etc. of machining. In the case of, for example, lathe machining, as mentioned later, only concentric and radial shapes can be obtained, and they share the "periodicity at the location of manifestation" in common.

It is to be understood that the reduction of the machining accuracy caused with the periodicity at the location of manifestation is undesirable. If the workpiece to be machined is an optical component or a mold (or mold part) used in the manufacture of the optical component, in particular, it is not rare that local unevenness in optical properties can be recognized macroscopically. Even if the local unevenness cannot be recognized macroscopically, moreover, it can be distinctly observed through a microscope in many cases. In any case, the performance of an apparatus that uses this optical component is lowered.

According to the aforesaid example (FIG. 2), the reduction of the surface accuracy itself is only more than 10 nm. Owing to regular development, however, it is impossible to fulfill the optical properties that are required by the light guide plate, in many cases. FIG. 1 shows the light guide plate manufactured using the mold part with the surface accuracy of its entire machined surface ranging from 10 to 20 nm. FIG. 2 shows a light guide plate manufactured using a mold part that includes alternately developed regions with a surface accuracy of less than 10 nm and a surface accuracy of 10 to 20 nm. Comparison between these light guide plates indicates that the latter is more liable to cause problems on optical properties than the former.

In many cases, the aforementioned periodic machining irregularities may be supposed to be caused by fine vibration of a damper or the like that is used in installing a spindle for machining or a machining apparatus. Although the problems can be solved by using a high-performance spindle and damper whose vibrations are on the nanometer level, therefore, these elements are very expensive. In some cases, moreover, the cause of the periodic vibration cannot be located and easily coped with.

Accordingly, there is a demand for a problem-solving technique that dispenses with the use of the expensive spindle or damper and is also applicable to the case where the cause of the periodic vibration cannot be located. According to an embodiment of the present invention, as mentioned later, fine irregular displacement is artificially caused between workpiece and tool by means of a piezoelectric element. Disclosed in JP 2005-7519A, on the other hand, is a technique for cutting a workpiece by utilizing a piezoelectric element. Thus, this disclosed technique shares the "utilization of the piezoelectric element for the generation of the fine displacement between workpiece and tool" in common with the present invention.

However, the technique disclosed in JP 2005-7519A is not intended to solve the problems of the aforementioned periodic machining irregularities. Further, this document contains no description of application of a voltage with irregular frequency and amplitude to the piezoelectric element, which is described in connection with the embodiment of the present invention.

## SUMMARY OF THE INVENTION

The present invention provides a technique that solves those problems caused by the periodic machining irregularities without preparing any expensive high-performance spindle or damper, and is applicable to the case where the cause of periodic vibration cannot be specified.

A machining apparatus of the present invention comprises: a tool for performing machining on a surface of a workpiece; a relative motion applying mechanism that applies relative motion to the tool with respect to the workpiece in three-dimensional directions including a machining-depth direction in which the tool moves closer to and away from the surface of the workpiece; and a vibratory-displacement applying mechanism that applies vibratory displacements with frequency and amplitude thereof varying irregularly to one of the tool and the workpiece in the machining-depth direction during the machining of the workpiece by the tool.

The vibratory-displacement applying mechanism may comprise a piezoelectric element that makes vibratory displacements proportional to a ripple voltage having irregular frequency and amplitude. The ripple voltage may be generated by using a white noise generator.

If a regular vibration attributable to disturbance during machining exists between the tool and the workpiece so as to cause periodic machining irregularities that reflect the vibration, according to the present invention, a relative displacement in the direction of cut of by the tool is applied as a vibration displacement with irregularly variable frequency and amplitude between the tool and the workpiece. Therefore, the periodic machining irregularities are obscured by cutting corresponding to the vibration displacement, so that the uniformity of the machining accuracy can be improved.

If the workpiece to be machined is an optical component or a mold (or mold part) used in the manufacture of the optical component, in particular, bad influences on its optical properties can be suppressed and obscured. Further, the present invention is economically advantageous because it requires no preparation of any expensive, high-performance spindle or damper. The invention also has an advantage of being applicable to the case where the cause of periodic vibration cannot be located and removed even with use of an expensive, high-performance spindle or damper.

## BRIEF DESCRIPTION OF THE DRAWINGS

FIG. 1 is a view showing a situation in which the machining accuracy for a machined surface is substantially uniform;

FIG. 2 is a view illustrating belt-shaped regions periodically generated such that the machining accuracy for the machined surface is reduced;

FIGS. 3a and 3b illustrate a machining apparatus according to one embodiment of the present invention, in which FIG. 3a is a sectional view showing an outline of the machining apparatus and FIG. 3b is a view illustrating the way a white noise generator is used to apply vibration voltage to a piezoelectric element in the machining apparatus;

FIG. 4 is a diagram showing an example of the waveform of the vibration voltage applied to the piezoelectric element;

FIG. 5 illustrates an external view of a lathe apparatus to which the invention is applied;

FIGS. 6a and 6b illustrate an example of a machined surface obtained by machining without applying the invention to the lathe apparatus shown in FIG. 5, in which FIG. 6a is a front view and FIG. 6b is a sectional view taken along line A-A of FIG. 6a;

FIGS. 7a and 7b illustrate another example of the machined surface obtained by machining without applying the invention to the lathe apparatus shown in FIG. 5, in which FIG. 7a is a front view and FIG. 7b is a sectional view taken along line B-B of FIG. 7a;

FIGS. 8a and 8b illustrate another example of the machined surface obtained by machining as a structure based on the invention applied to the lathe apparatus shown in FIG. 5, in which FIG. 8a is a front view and FIG. 8b is a sectional view taken along line C-C of FIG. 8a; and

FIG. 9 is a view illustrating an example of a structure for applying a vibration displacement to a workpiece.

## DETAILED DESCRIPTION

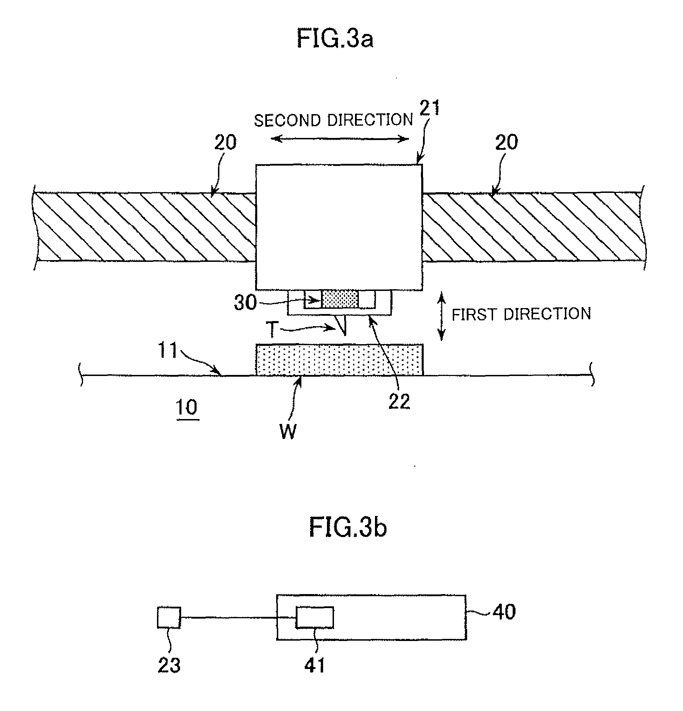

FIGS. 3a and 3b are views for illustrating a machining apparatus according to one embodiment of the present invention. Referring first to FIG. 3a that shows an outline of the machining apparatus with a workpiece mounted therein, numeral 10 denotes a worktable. A workpiece W is mounted on its workpiece mounting surface 11. A tool T for machining the workpiece W is supported on a movable unit 21 by an elastic member 22 that is attached to the movable unit 21, and can move relatively to the workpiece W with a three-dimensional degree of freedom.

In the case of this embodiment, a relative motion along a direction of depth of cutting by the tool T is achieved by ascent/descent motion of the worktable 10 by a lift mechanism (not shown). In FIG. 3a, the direction of the ascent/descent motion (i.e., the direction of the cutting depth by the tool T) is described as "first direction". The first direction can also be referred to as "direction in which the tool T is moved closer to/away from the workpiece W".

The remaining two degrees of freedom of movement are given to the movable unit 21. Specifically, the movable unit 21 is configured to move in a second direction perpendicular to (or inclined at a predetermined angle to, in some cases) the first direction and a third direction (not shown) equivalent to a direction traversing the drawing plane of FIG. 3a (typically, perpendicular to both the first and second directions) by a two-dimensional drive mechanism (not shown) that is provided on a fixed unit 20.

As is generally known, the shape into which the workpiece W is machined by means of the tool T is usually specified by a machining program, and the necessary movements in the three directions (first to third directions) for the machining are executed by operations of servo axes that cover the movements in the individual directions.

By way of example, the machining apparatus described herein is used in machining such that a large number of fine grooves that traverse in the horizontal direction of FIG. 1 (corresponding to the second direction) are cut at fine intervals (corresponding to repeated movement pitches in the third direction) on the upper surface of a mold part shown in FIG. 1. FIG. 2 illustrates a phenomenon that low-accuracy regions periodically develop like belts along the horizontal direction of FIG. 2 (corresponding to the second direction) during the machining.

In order to obscure this phenomenon, according to the present embodiment, a piezoelectric element 30 is provided in the manner shown in FIG. 3a. As shown in FIG. 3b, the piezoelectric element 30 is connected to a white noise generator 41 in a controller (CNC) 40 so that it can be driven by a driving voltage with irregular frequency and amplitude generated by the generator 41. ON/OFF operation for the output of the white noise generator 41, maximum amplitude, etc., can be controlled by a command from a CPU (not shown) in the CNC 40.

In the present embodiment, as shown in FIG. 3a, a leaf spring with a U-shaped profile is used as the elastic member 22 and it is fixed in the illustrated posture to the movable unit 21. A gap is defined between the movable unit and the back surface of the leaf spring 22 (surface opposite from the surface on which the tool T is mounted), and the piezoelectric element 30 is located so as to fill the gap. The piezoelectric element 30 is mounted on the movable unit 21, while its operating surface (which is deformed in the first direction in response to applied voltage) is mechanically coupled to the back surface of the leaf spring 22 by, for example, adhesive bonding.

If the driving voltage with irregular frequency and amplitude is output from the white noise generator 41 in the CNC 40 the moment the machining is started, therefore, the piezoelectric element 30 is actuated to realize machining such that the cutting depth in the machined surface of the workpiece W varies depending on vibration of the tool T, thereby adding indentations of a fine height (depth). The addition of these indentations serves to obscure periodic reduction (unevenness) of the machining accuracy.

As is generally known, the piezoelectric element 30 is an element that causes a deformation that is substantially proportional to the applied driving voltage (piezoelectric applied voltage) based on a piezo effect. If the applied voltage and a deformation (displacement) caused thereby are V(t) and δ(t), respectively, δ(t) is

$$\delta(t) = k \cdot V(t) \qquad \cdots (1)$$

where t is time.

In the above equation (1), k is a proportionality constant, which may, for example, be given by k = 10 nm/volt [0 volt ≤ V(t) ≤ 10 volts], among various other available values.

As seen from the above proportional relationship, a "vibration waveform with irregularly variable frequency and amplitude" should only be used as the applied voltage V(t) in order to realize a "relative displacement in the first direction between the tool T and the workpiece W is a vibration displacement with irregularly variable frequency and amplitude". It is known that the white noise generator can be utilized as a source of such a vibration waveform, and this generator is used in the present embodiment (see FIG. 3b).

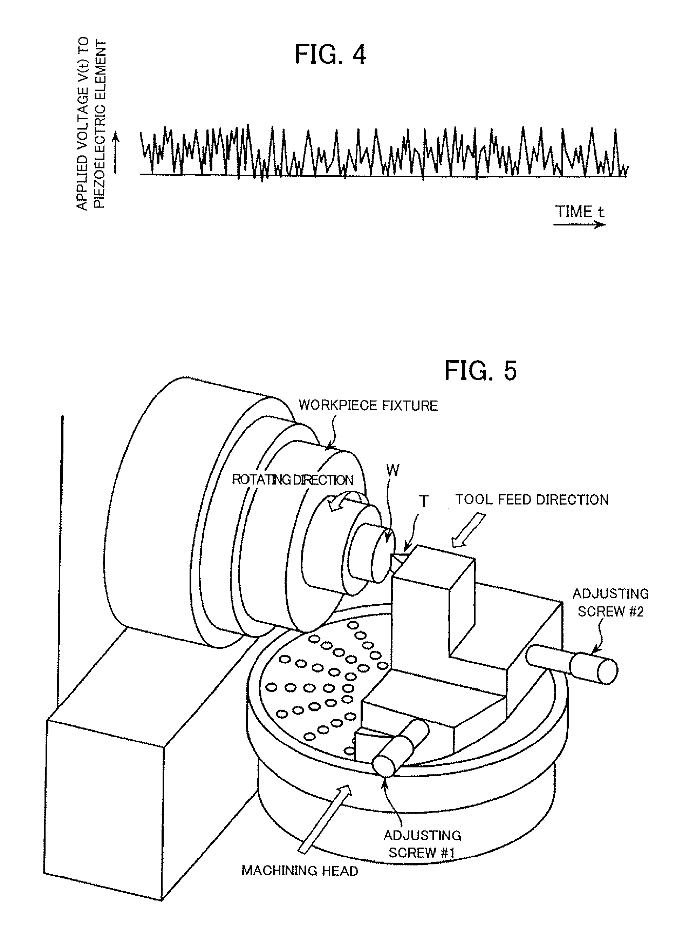

FIG. 4 shows an example of the "vibration waveform with irregularly variable frequency and amplitude". If a driving voltage with the vibration waveform shown in FIG. 4 is applied to the piezoelectric element, a vibration displacement with a similar waveform can be obtained. The amplitude of the vibration displacement can be determined according to the aforesaid equation (1). If the piezoelectric element 30 has the aforementioned value of k and if an irregular displacement with a maximum amplitude of about 20 nm is required, the applied voltage V(t) should only be selected having the waveform shown in FIG. 4 and the maximum amplitude of about 2 volts.

In general, the amplitude of the vibration displacement to be applied between the tool and the workpiece depends on the degree of unevenness in accuracy that is developed when no vibration is applied. If the unevenness in accuracy that is developed when no vibration is applied is large, the amplitude of the vibration displacement should also be made large. If the unevenness in accuracy developed when no vibration is applied is small, the amplitude of the vibration displacement may also be small. This is to be understood in the light of the concept of the present invention to prevent the development of machining irregularities by making them submerged in fine indentations in the machined surface obtained by the vibration displacement.

Based on the same concept, the frequency of the applied voltage V(t) should preferably be sufficiently higher (but shorter in period) than the frequency of disturbance. Main causes of disturbance include vibrations of machines and machine locations, tool chatter, etc. For quantitative conditions for the "irregularity" of the frequency of the applied voltage V(t), this frequency should preferably be changed within a range of about 2 to 100 times that of the disturbance.

It is only by way of example that the direction in which the "relative vibration displacement between the tool and the workpiece" is applied (i.e., the first direction of the cutting-depth direction) is a vertical direction (gravitational direction) in the case of the machining apparatus shown in FIGS. 3a and 3b. In some cases, for example, the direction in which the "relative vibration displacement between the tool and the workpiece" is applied may be a horizontal direction (perpendicular to the gravitational direction). Machining using a lath shown in FIG. 5 is one such typical example. FIG. 5 illustrates an external view of a lathe apparatus in which the workpiece W is mounted on a workpiece fixture in the conventional manner and is rotated as it is machined by means of the tool T.

In the lathe apparatus of this type, the cutting-depth direction in which the tool T is moved closer to/away from the workpiece W is the direction of a rotary axis of the workpiece fixture. A movement in the cutting-depth direction is achieved by relative movement of the workpiece fixture with respect to a machining head for supporting a tool T along the direction of the rotary axis of the workpiece fixture. The machining head supports the tool T on its top side surface and is mounted on an axis for movement in a horizontal direction perpendicular to the direction of the rotary axis of the workpiece fixture, so that a distance between the tool T and the rotary axis of the workpiece fixture changes by the movement. Adjusting screws #1 and #2 serve to adjust the attitude of the tool T. During machining operation, the screws are tightened to keep the attitude of the tool T fixed.

According to the present invention, the relative vibration displacement along the direction of the rotary axis of the workpiece fixture is applied between the tool T and the workpiece W. To attain this, it is necessary only that the tool T be mounted on an elastic member (leaf spring, not shown) that is coupled to the piezoelectric element in the manner shown in FIG. 3a and provided on a tool supporting portion on the top side surface of the machining head. In the case where the present invention is applied to the lathe apparatus shown in FIG. 5, however, the horizontal direction (direction of the rotary axis of the workpiece fixture) corresponds to the "first direction" (direction of cut by the tool T) shown in FIG. 3a, so that the respective attitudes of the piezoelectric element and the elastic member set in position are different by 90 degrees, as compared with the case of FIG. 3a.

The properties, drive modes, etc., of the piezoelectric element 30 have been described before. As described with reference to FIG. 3b, the piezoelectric element is connected to the white noise generator in the controller (CNC) of the machining apparatus (lathe apparatus in this case) so that it is driven by the driving voltage with irregular frequency and amplitude generated by the white noise generator. The ON/OFF operation for the output of the white noise generator, maximum amplitude, etc., can be controlled by the command from the CPU (not shown) in the CNC.

If the voltage of the vibration waveform with irregular frequency and amplitude is applied the moment the machining is started, the "relative vibration displacement in the first direction (horizontal direction in this case) between the tool T and the workpiece W" is induced. Based on the aforementioned proportional relationship between the applied voltage V(t) and the displacement δ(t), the frequency of the relative vibration displacement is substantially equal to the frequency of the applied voltage waveform including its transition. Further, the vibration displacement of the piezoelectric element on the operating surface along the first direction, which is induced by the relationship given by the aforesaid equation (1), is transmitted to the elastic member (leaf spring), whereupon the tool T that is attached to the elastic member vibrates.

As mentioned before, machining is realized such that the depth of cut in the machined surface of the workpiece W finely varies depending on the vibration of the tool T, thereby adding indentations of a fine height (depth). The addition of these indentations serves to obscure periodic reduction (unevenness) of the machining accuracy. Since the amplitude of the vibration displacement of the piezoelectric element on the operating surface is usually reduced according to the elasticity of the elastic member (leaf spring), the mass of the tool T, etc., the amplitude of the applied voltage should only be determined in consideration of it.

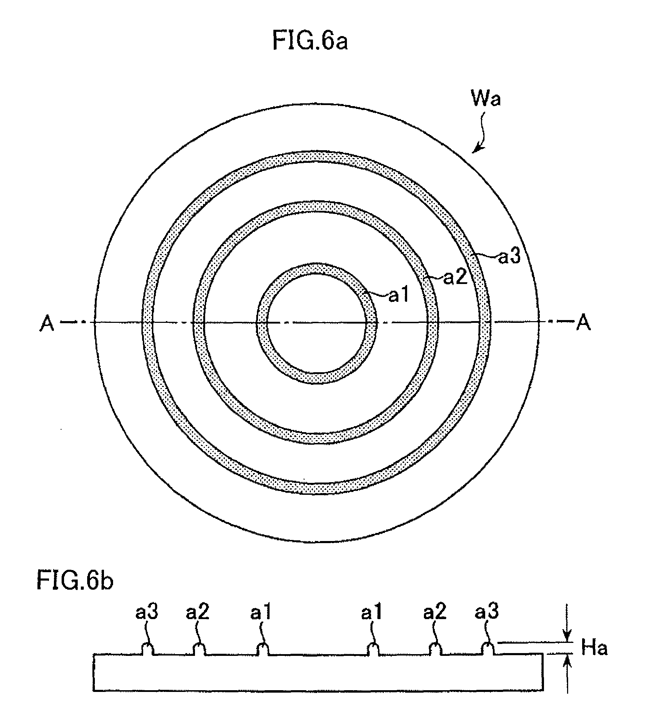

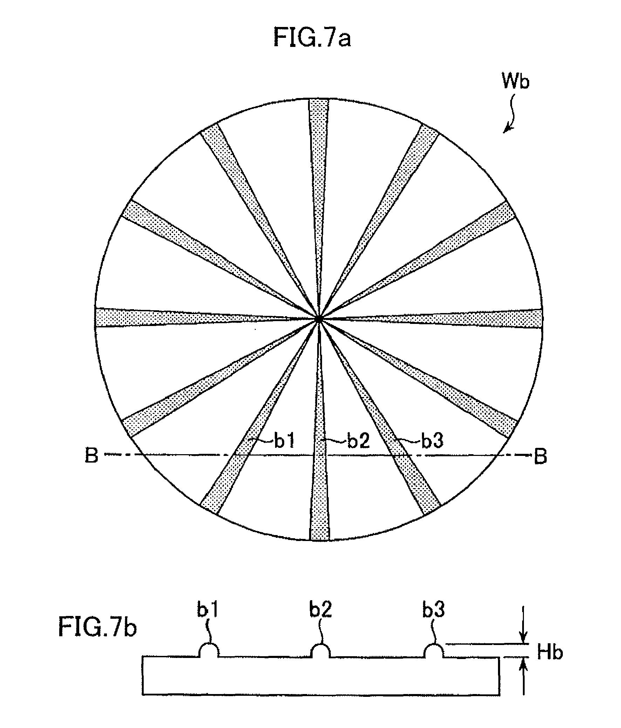

FIGS. 6a and 6b and FIGS. 7a and 7b show examples of machined surfaces for cases where machining is performed with the tool T fixed to the machining head (or without applying the aforesaid irregular vibration to the supporting structure) without applying the present invention to the lathe apparatus shown in FIG. 5. FIG. 6b is a sectional view taken along line A-A of FIG. 6a, and FIG. 7b is a taken along line B-B of FIG. 7a.

In the examples shown in FIGS. 6a and 6b and FIGS. 7a and 7b, machining irregularity portions a1 to a3 and b1 to b3 develop as projections of which the depth of cut is deficient by about Ha or Hb. Ha or Hb may also be said to be the height of the projections. As mentioned before, the distribution patterns of the machining irregularity portions a1 to a3 and b1 to b3 viewed in the frontal direction of the machined surfaces have some periodicity. In the example shown in FIGS. 6a and 6b, the pattern is shaped like concentric circles (with periodicity based on repetition along the radial direction). In the example shown in FIGS. 7a and 7b, the pattern is radial (with periodicity based on repetition along the circumferential direction).

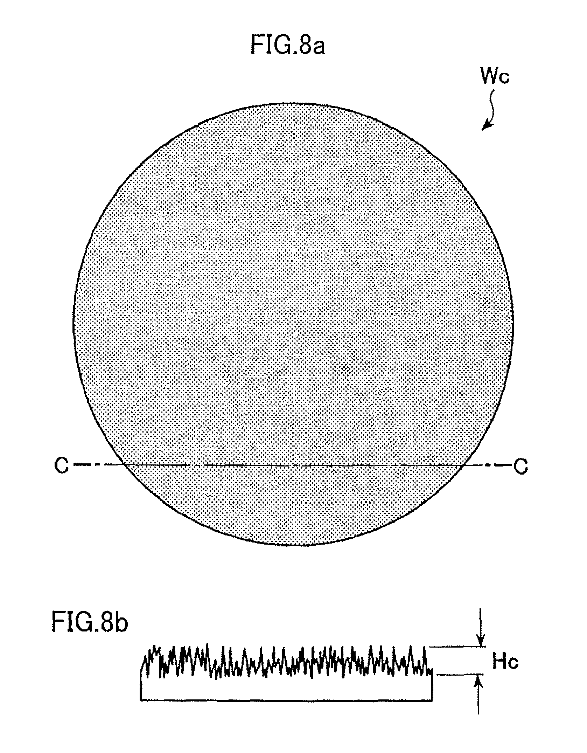

In contrast with the examples described above, the machining irregularities may possibly emerge as excessively cut portions. However, the machining irregularities (deficiency or surplus in the depth of cut) are scanty in any event and are about several nm in many cases. If the present invention is applied to the lathe apparatus shown in FIG. 5 so that the relative vibration displacement along the direction of the rotary axis of the workpiece fixture is given to the tool T, as mentioned before, therefore, machining irregularities such as the ones shown in FIGS. 6a and 6b and FIGS. 7a and 7b can be obscured to obtain a machined surface shown in FIGS. 8a and 8b, for example.

Specifically, the depth of cut by the tool T is increased or reduced by a margin corresponding to the vibration of the piezoelectric element during machining operation, and innumerable fine indentations such as the ones shown in FIG. 8b are formed. These indentations can obscure the periodic machining irregularities. Preferably, the amplitude of the vibration voltage applied to the piezoelectric element should be set so as to obtain the vibration displacement that ensures fulfillment of this obscuring effect.

Preferably, in general, the maximum amplitude of the displacement obtained should range from about two to ten times the size (e.g., Ha or Hb) of the machining irregularities. In the case where Ha or Hb = about 10 nm is given for the piezoelectric element that has the aforementioned properties, the machining irregularities with Ha or Hb = about 10 nm can be obscured by irregular indentations with Hc (maximum indentation height) = about 20 to 60 nm shown in FIG. 8b if the amplitude of V(t) is set to about 2 to 5 volts, for example.

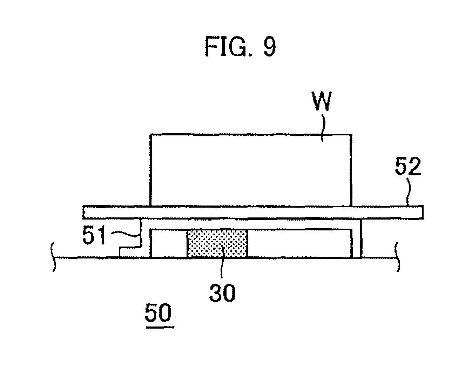

Although the tool is vibrated in order to apply the relative vibration displacement along the cutting depth direction between the tool and the workpiece according to the above description, the workpiece may be vibrated instead. As shown in FIG. 9, for example, a worktable 52 may be provided on a leaf spring 51, which has the same shape as the aforementioned leaf spring 22 and is coupled to a piezoelectric element 30 for vibration. If this is done, the same vibration as aforesaid can be applied to the workpiece W with the same effect (machining irregularity obscuring effect) .

**Claims**

1.  A machining apparatus comprising:

    a tool for performing machining on a surface of a workpiece;
    a relative motion applying mechanism that applies relative motion to said tool with respect to the workpiece in three-dimensional directions including a machining-depth direction in which said tool moves closer to and away from the surface of the workpiece; and
    a vibratory-displacement applying mechanism that applies vibratory displacements with frequency and amplitude thereof varying irregularly to one of said tool and the workpiece in the machining-depth direction during the machining of the workpiece by said tool.

2.  A machining apparatus according to claim 1,
    wherein said vibratory-displacement applying mechanism comprises a piezoelectric element that makes vibratory displacements proportional to a ripple voltage having irregular frequency and amplitude.

3.  A machining apparatus according to claim 2,
    wherein the ripple voltage is generated by using a white noise generator.

# FIG. 1

SURFACE ACCURACY: 1nm–40nm

# FIG. 2

SURFACE ACCURACY: 10nm–40nm

SURFACE ACCURACY: 1nm–9nm

# FIG.3a

SECOND DIRECTION

FIRST DIRECTION

20    21    20

30    T    22

11    10    W

# FIG.3b

23    41    40

# FIG. 4

# FIG. 5

EP 1 925 384 A1

## FIG.6a

## FIG.6b

# FIG.7a

Wb

B ----------- b1 --- b2 -- b3 ----------- B

# FIG.7b

b1    b2    b3

Hb

## FIG.8a

Wc

C —·— ·— C

## FIG.8b

Hc

# FIG. 9

**European Patent Office**

**EUROPEAN SEARCH REPORT**

Application Number

EP 07 11 9644

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 00/25963 A (CLAESSON INGVAR [SE]; LAGOE THOMAS [SE]; HAAKANSSON LARS [SE]) 11 May 2000 (2000-05-11) * page 1, lines 10-12; figure 1 * * page 1, lines 26-28 * * page 2, line 8 - page 7, line 27 * ----- | 1-3 | INV. B23B29/12 B23B5/00 |
| Y | GB 714 860 A (FERRANTI LTD) 1 September 1954 (1954-09-01) * page 1, lines 40-48; figures 1,2 * ----- | 1 | |
| Y | JP 60 016301 A (KUMABE JIYUNICHIROU) 28 January 1985 (1985-01-28) * abstract * ----- | 1 | |
| | | | TECHNICAL FIELDS SEARCHED (IPC) |
| | | | B23B B24B |

The present search report has been drawn up for all claims

| Place of search | Date of completion of the search | Examiner |
|---|---|---|
| Munich | 5 March 2008 | Wendl, Helen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 11 9644

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2008

| Patent document cited in search report | | Publication date | Patent family member(s) | | Publication date |
|---|---|---|---|---|---|
| WO 0025963 | A | 11-05-2000 | AU | 1428000 A | 22-05-2000 |
| | | | EP | 1140404 A1 | 10-10-2001 |
| | | | JP | 2002528280 T | 03-09-2002 |
| | | | SE | 515157 C2 | 18-06-2001 |
| | | | SE | 9803606 A | 23-04-2000 |
| | | | US | 6925915 B1 | 09-08-2005 |
| GB 714860 | A | 01-09-1954 | NONE | | |
| JP 60016301 | A | 28-01-1985 | JP | 1441891 C | 30-05-1988 |
| | | | JP | 62046281 B | 01-10-1987 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005007519 A